# EUROPÄISCHE PATENTSCHRIFT

(11) **EP 2 881 332 B1**
(45) Veröffentlichungstag und Bekanntmachung des Hinweises auf die Patenterteilung: **23.03.2016**
(21) Anmeldenummer: 13195422.4
(22) Anmeldetag: 03.12.2013
(51) Int. Cl.: B65B 61/20

(54) **Transportvorrichtung zum Fördern von Produkten**
Transport device for transporting products
Dispositif de transport de produits

(43) Veröffentlichungstag der Anmeldung: 10.06.2015
(73) Patentinhaber: Uhlmann Pac-Systeme GmbH & Co. KG, 88471 Laupheim (DE)
(72) Erfinder: Aumann, Thomas, 88451 Dettingen (DE)
(74) Vertreter: Wächter, Jochen

(56) Entgegenhaltungen:
- EP-A1- 1 790 593
- EP-A2- 1 050 472
- EP-A2- 2 216 278
- WO-A1-2013/156177
- DE-A1- 1 586 137
- US-A- 5 261 520

## Beschreibung

Die vorliegende Erfindung betrifft eine Transportvorrichtung zum Fördern von Produkten, insbesondere Blisterpackungen.

In der pharmazeutischen Industrie werden als Verpackung für Medikamente häufig sog. Blisterpackungen verwendet, die eine Vielzahl von Näpfen enthalten, in welchen die pharmazeutischen Produkte, wie etwa Dragees oder Tabletten, aufgenommen sind. Die Blisterpackungen werden üblicherweise wiederum einzeln oder als Blisterpackungsstapel in weitere äußere Verpackungen, wie etwa Faltschachteln, eingebracht.

Üblicherweise wird neben den Blisterpackungen auch eine dazugehörige Produktbeilage in die äußere Verpackung eingebracht. Gemäß DE 15 86 137 hat eine kontinuierlich umlaufende Förderkette mehrere Produktaufnahmen, in welchen jeweils ein Produkt angeordnet werden kann. Zusätzlich ist es möglich, mit Hilfe einer Übergabevorrichtung jeder Produktaufnahme eine Produktbeilage zuzuordnen. Hierzu werden die Produktbeilagen durch die Übergabevorrichtung an jeweilige Klemmtaschen an den Produktaufnahmen übergeben. Die Übergabevorrichtung besteht aus einem Drehtisch, auf dem in Umfangsrichtung mehrere Haltezangen zum Aufnehmen, Halten und Übergeben der Produktbeilagen angeordnet sind.

Zum Zuführen der Blisterpackungen ist neben der zuvor genannten, kontinuierlich umlaufenden Förderkette auch eine Transportvorrichtung bekannt, bei der mehrere Schlitten entlang einer Laufschiene unabhängig voneinander bewegt werden. Dies wird realisiert, indem die Laufschiene eine Linearmotor-Antriebsvorrichtung zum Antrieb der Schlitten aufweist, wobei jeder Schlitten mindestens einen Permanentmagneten aufweist, der mit der Linearmotor-Antriebsvorrichtung in Wirkverbindung steht. Eine derartige Transportvorrichtung mit Linearmotorantrieb ist aus WO 2013/156177 A1 bekannt.

Der vorliegenden Erfindung liegt die Aufgabe zugrunde, eine Vorrichtung zum Fördern von Produkten sowie der zugeordneten Produktbeilage zu schaffen, bei der der Durchsatz verbessert ist und die möglichst wenig mechanische Teile benötigt.

Diese Aufgabe wird durch die Merkmale des Anspruchs 1 gelöst.

Erfindungsgemäß umfasst die Transportvorrichtung zum Fördern von Produkten, insbesondere Blisterpackungen, mindestens einen bewegbaren Schlitten zum Fördern wenigstens eines Produktes, sowie eine ortsfeste, umlaufend angeordnete Laufschiene zur Führung des mindestens einen Schlittens. Zum Antrieb des mindestens einen Schlittens ist eine Linearmotor-Antriebsvorrichtung vorgesehen, wobei der mindestens eine Schlitten mindestens einen Permanentmagneten aufweist, der mit der Linearmotor-Antriebsvorrichtung in Wirkverbindung steht. Außerdem ist an dem Schlitten ein Halteelement zum Halten der dem wenigstens einem Produkt zugeordneten Produktbeilage angeordnet. Das Halteelement ist zum Halten der Produktbeilage in einen aktivierten Zustand (z.B. geschlossene Stellung) und zum Aufnehmen und/oder Freigeben der Produktbeilage in einen deaktivierten Zustand (z.B. geöffnete Stellung) bringbar. Weiterhin ist das Halteelement an dem Schlitten derart angeordnet, dass die Produktbeilage seitlich neben der Bewegungsbahn des wenigstens einen Produktes gehalten und mit der Bewegung des wenigstens einen Produktes entlang der Laufschiene mitbewegt wird.

Ein Vorteil besteht darin, dass für den Transport der Produkte sowie der zugeordneten Produktbeilagen insgesamt weniger Bauteile benötigt werden. Während bei den herkömmlichen Produktförderketten an jeder Aufnahme ein Halteelement zum Halten einer Produktbeilage vorhanden sein muss, wird gemäß der Erfindung lediglich ein Halteelement pro Schlitten benötigt. Es versteht sich, dass die Anzahl der Schlitten, die entlang der Laufschiene geführt werden, geringer ist als die Anzahl der Aufnahmen einer Produktförderkette, sofern die Laufschiene und die Produktförderkette vergleichbare Umlauflängen haben. Außerdem entfällt die Notwendigkeit von zwei parallelen Transportvorrichtungen für Produkte und Produktbeilagen. Ein weiterer Vorteil besteht darin, dass aufgrund des gemeinsamen Transports von Produkt und Produktbeilage die Koordinierung bei der Übergabe bzw. beim Einschieben in eine Faltschachtel vereinfacht ist. Schließlich ist durch die individuelle Verfahrbarkeit der Schlitten mit Halteelement nun die Möglichkeit gegeben, Auszeiten oder Wartezeiten der Schlitten aufgrund fehlerhafter Produkte oder Produktbeilagen zu kompensieren.

Vorzugsweise ist das Halteelement um eine Drehachse, die sich in etwa senkrecht zum Laufschienenverlauf erstreckt, schwenkbar gelagert, wobei das Halteelement hinsichtlich seiner Drehstellung zwischen einer Produktbeilage-Aufnahmeposition und einer Produktbeilage-Übergabeposition schwenkbar ist. Damit können die Produktbeilagen, je nach Bedarf, in einfacher Weise in unterschiedliche Ausrichtungen, wie etwa Querkantlage oder Hochkantlage, gebracht werden. Auf diese Weise wird einerseits eine sichere Einfügung der Produktbeilage in das Halteelement (in der Produktbeilage-Aufnahmeposition) ermöglicht, während andererseits eine automatische Mitnahme der Produktbeilage beim Einschieben der Produkte in die Faltschachtel (in der Produktbeilage-Übergabeposition) gewährleistet ist.

Der Schwenkwinkel zwischen der Produktbeilage-Aufnahmeposition und der Produktbeilage-Übergabeposition beträgt vorzugsweise in etwa 90°.

Wenn das Halteelement als Haltezange mit zwei Halteschenkeln ausgebildet ist, wobei wenigstens ein Halteschenkel in Richtung auf den jeweils anderen Halteschenkel in die geschlossene Stellung vorgespannt, insbesondere mittels Federkraft vorgespannt ist, ergibt sich ein Vorteil insofern, als dass zur Steuerung der Haltezange lediglich für den Vorgang des Öffnens der Haltezange Sorge zu tragen ist. Das Halteelement kann jedoch auch in einer anderen Ausgestaltung, wie etwa in Form eines Saugnapfes oder einer Saugerarms, vorgesehen sein.

Es ist weiterhin bevorzugt, dass sich in der Produktbeilage-Aufnahmeposition die Halteschenkel in etwa quer zum Laufschienenverlauf erstrecken und sich in der Produktbeilage-Übergabeposition die Halteschenkel in etwa parallel zum Laufschienenverlauf erstrecken. Ein Vorteil besteht darin, dass in der Produktbeilage-Aufnahmeposition die Produktbeilage einfach in die gespreizte Haltezange fallen kann, ohne dass die Gefahr eines Durchrutschens der Produktbeilage zwischen den Halteschenkeln besteht.

Durch das Vorspannen des Halteelements in die Produktbeilage-Übergabeposition, insbesondere mittels Federkraft, wird in vorteilhafter Weise erreicht, dass beim Verfahren des Schlittens um die Laufschiene zu jedem Zeitpunkt und insbesondere im Zeitpunkt der Übergabe der Produkte vom Schlitten an die Faltschachtel die Position der Produktbeilage am Schlitten fixiert ist.

Um die Schwenkbewegung des Halteelements zu begrenzen, ist vorzugsweise an dem Schlitten ein Anschlag ausgebildet, an dem das Halteelement in der Produktbeilage-Übergabeposition anliegt.

In der bevorzugten Ausführungsform ist an der Laufschiene eine Kurvenscheibe und an dem Halteelement eine Kurvenrolle angeordnet, die an der Kurvenscheibe abrollt, wobei die Kurvenscheibe und die Kurvenrolle derart zusammenwirken, dass das Halteelement durch die Bewegung des Schlittens entlang der Laufschiene in Schwenkbewegung versetzt wird. Die Steuerung der Schwenkbewegung des Halteelements lässt sich mit Hilfe der Kurvenscheibe exakt reproduzierbar verwirklichen, während der technische Aufwand gering ist.

Bevorzugt weist die Kurvenscheibe einen ersten Kurvenabschnitt und einen zweiten Kurvenabschnitt auf, wobei beim Abrollen der Kurvenrolle entlang des ersten Kurvenabschnitts das Halteelement in die Produktbeilage-Aufnahmeposition bewegt wird, und beim Abrollen der Kurvenrolle entlang des zweiten Kurvenabschnitts das Halteelement in die Produktbeilage-Übergabeposition bewegt wird. Damit wird in einfacher Weise eine solche Zwangsführung geschaffen, bei der durch eine lineare Bewegung des Schlittens in nur einer Richtung zwei Drehrichtungen des Halteelements verwirklicht werden.

In weiterer Ausgestaltung ist im Bereich des ersten Abschnitts der Kurvenscheibe ein Schieberelement vorgesehen, um die Halteschenkel gegen die Vorspannung zueinander auf Abstand zu halten, so dass die Haltezange zur Aufnahme einer Produktbeilage geöffnet ist.

Jeder Schlitten weist vorzugsweise ein Bodenelement und zwei davon senkrecht nach oben abragende und sich quer zum Laufschienenverlauf erstreckende Seitenbegrenzungselemente auf, die die Aufnahme für die Produkte definieren. Und schließlich ist es vorteilhaft, wenn die Aufnahme in Richtung quer zum Laufschienenverlauf beidseitig offen ist. Damit ist ein sicheres Halten der Produkte beim Transport möglich, während gleichzeitig die Möglichkeit besteht, die Produkte zusammen mit der Produktbeilage über die offenen Seiten mit Hilfe eines Schiebers in eine Verpackung einzuschieben.

Weitere Eigenschaften und Vorteile der vorliegenden Erfindung ergeben sich aus der nachfolgenden Beschreibung unter Bezugnahme auf die Zeichnungen.
- Fig.1: ist eine perspektivische Ansicht einer erfindungsgemäßen Transportvorrichtung, in der zusätzlich eine Falzstation und eine ProduktbeilagenZuführstation gezeigt sind;
- Fig. 2: ist eine vergrößerte Ansicht eines Abschnitts der Transportvorrichtung aus Fig. 1, in der ein Schlitten mit Haltezange an der Laufschiene gezeigt ist;
- Fig. 3: ist eine vergrößerte Ansicht eines weiteren Abschnitts der Transportvorrichtung aus Fig. 1, in der die Produktbeilage-Zuführstation und ein Schlitten mit zugehörigem Kurvenscheibenmechanismus gezeigt ist;
- Fig. 4: ist eine vergrößerte Seitenansicht eines Abschnitts der Transportvorrichtung und der Produktbeilage-Zuführstation aus Fig. 3; und
- Fig. 5: ist eine vergrößerte Frontansicht eines Abschnitts der Transportvorrichtung aus Fig. 1, in der ein Abschnitt der Transportvorrichtung sowie der Kurvenscheibenmechanismus des Schlittens dargestellt sind.

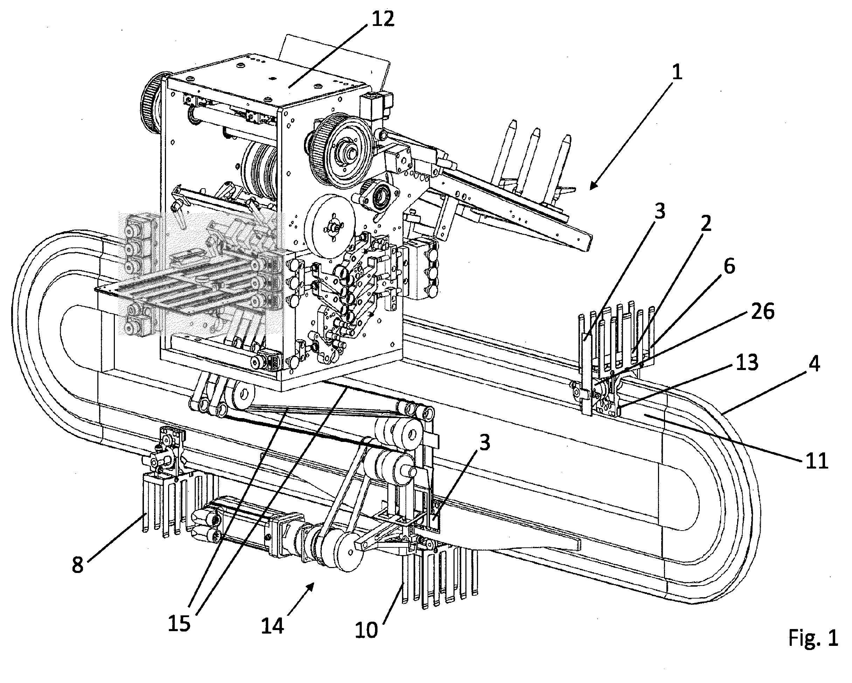

Fig. 1 zeigt den grundsätzlichen Aufbau einer erfindungsgemäßen Transportvorrichtung 1 zur Förderung von Produkten 2, insbesondere Blisterpackungen oder Blisterpackungsstapeln. Die Transportvorrichtung 1 umfasst eine ortsfest umlaufend angeordnete Laufschiene 4 zur Führung der bewegbaren Schlitten 6, 8, 10, die zum Fördern der Produkte 2 dienen und entlang der Laufschiene 4 bewegt werden. Auch wenn im dargestellten Beispielsfall lediglich drei Schlitten 6, 8, 10 vorhanden sind, werden in der Regel mehr als drei Schlitten gleichzeitig auf derselben Laufschiene verfahren. Es können auch weniger als drei Schlitten vorhanden sein.

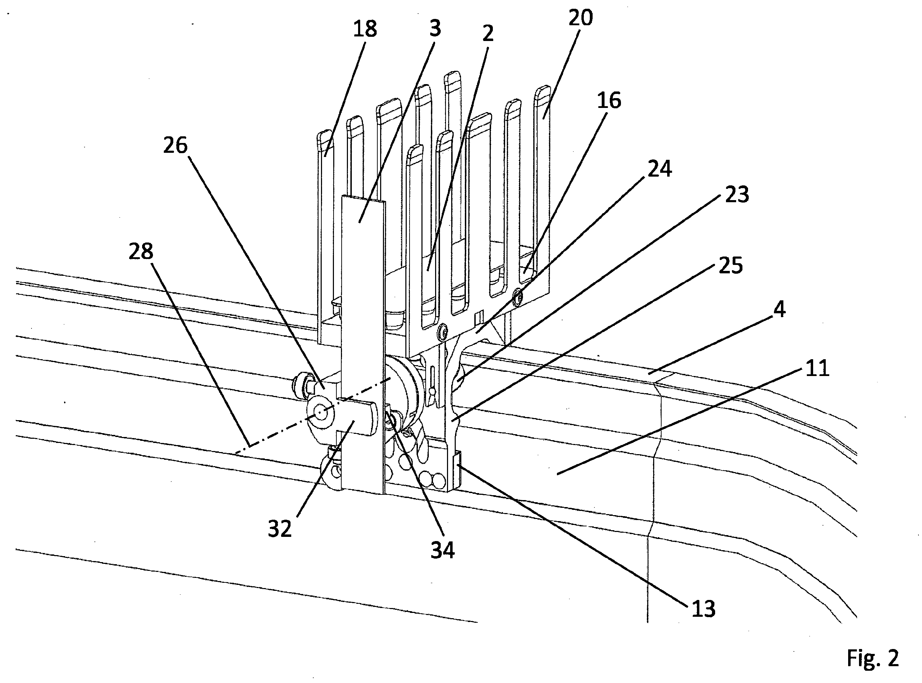

Zum Antrieb der Schlitten 6, 8, 10 dient eine Linearmotor-Antriebsvorrichtung 11. Die Linearmotor-Antriebsvorrichtung 11 ist in der Laufschiene 4 integriert und umfasst eine Mehrzahl von aneinander gereihten Spulen, die einzeln bestromt werden können. Die Schlitten 6, 8, 10 weisen jeweils wiederum wenigstens einen, vorzugsweise zwei, Permanentmagneten 13 auf, die mit der Linearmotor-Antriebsvorrichtung 11 in Wirkverbindung stehen. Die Lagerung und Führung der Schlitten 6, 8, 10 entlang der Laufschiene 4 erfolgt über eine Mehrzahl von Laufrollen 23 (Fig. 2). Für die konstruktive Ausgestaltung der Schlitten 6, 8, 10 und deren Lagerung auf der Laufschiene 4 existiert eine große Anzahl von Möglichkeiten.

Die Laufschiene 4 ist eine umlaufende Schiene und die Schlitten 6, 8, 10 bewegen sich an der Außenseite einmal um die gesamte Laufschiene 4 herum, bis sie wieder die Ausgangsposition erreichen. Wie Fig. 1 zeigt, ist ein Schlitten 6 auf dem oberen Trum der umlaufenden Laufschiene 4 angeordnet, während die anderen beiden Schlitten 8, 10 jeweils auf dem unteren Trum der umlaufenden Laufschiene 4 angeordnet sind.

Wie aus Fig. 1 deutlich wird, liegt im dargestellten Beispielsfall die Linearmotor-Antriebsvorrichtung 11 innerhalb der von der Laufschiene 4 definierten ovalen Form und weist eine ebensolche ovale Form auf. Jeder Schlitten 6, 8, 10 wird demnach abschnittsweise eine geradlinige Bewegung und abschnittsweise eine Kurvenbewegung ausführen. Durch eine Kombination von Gerade und Kurven können neben der in Fig. 1 gezeigten ovalen Bahnform der Laufschiene 4 beliebe Bahnformen realisiert werden. Es sind demnach viele andere Ausgestaltungen möglich.

Weiterhin ist in Fig. 1 eine Falzstation 12 zum Falzen von flachen Produktbeilage-Bögen gezeigt, die entsprechende mechanische Einrichtungen und Werkzeuge zum Herstellen der gewünschten Falzlinien aufweist. Der Falzstation 12 ist wiederum eine Produktbeilage-Zuführstation 14 nachgelagert, die mehrere, um Rollen geführte Riemenbänder 15 umfasst, um die gefalzten Produktbeilagen 3 von der Falzstation 12 aufnehmen und der Transportvorrichtung 1 zuführen zu können, wie nachfolgend näher beschrieben. Weiterhin ist in Fig. 1 in dem Bereich der Produktbeilage-Zuführstation 14 ein Kurvenscheibenmechanismus 35 gezeigt, der ebenfalls nachfolgend näher erläutert wird.

Der in Fig. 1 rechts oben an der Laufschiene 4 befindliche Schlitten 6 ist in Fig. 2 in einer vergrößerten Ansicht dargestellt. Jeder Schlitten 6, 8, 10 weist ein Bodenelement 16 und zwei davon senkrecht nach oben abragende und sich quer zum Laufschienenverlauf erstreckende Seitenbegrenzungselemente 18, 20 auf, die die Aufnahme für die Blisterpackungen 2 definieren. Weiterhin sind die Seiten der Schlitten 6, 8, 10 zwischen den beiden Seitenbegrenzungselementen 18, 20 offen. Die Schlitten 6, 8, 10 weisen auch einen im Wesentlichen hufeisenförmigen oder umgekehrt U-förmigen Grundkörper 24 auf, von dessen Schenkeln Laufrollen 23 (in Fig. 2 ist nur eine gezeigt) nach innen abragen. Das Bodenelement 16 ist wiederum oben auf dem Grundkörper 24 angeordnet.

Im Speziellen ist in Fig. 2 auch ein Halteelement 26 zum Halten einer gefalzten Produktbeilage 3 gezeigt. Das Halteelement 26 ist an einem Schenkel 25 des Grundkörpers 24 seitlich angebracht und dort schwenkbar um eine Drehachse 28, die senkrecht zum Laufschienenverlauf verläuft, gelagert. Zum Halten der gefalzten Produktbeilage 3 ist das Halteelement 26 als Haltezange mit mehreren, hier zwei, Halteschenkeln 32, 34 ausgebildet, von denen in Fig. 2 nur der Halteschenkel 32 vollständig gezeigt ist.

Wie Fig. 2 weiter zu entnehmen ist, erstreckt sich das Halteelement 26 von dem Schenkel 25 senkrecht zum Laufschienenverlauf bzw. in Richtung der Längsseite des Bodenelements 16 und steht in Richtung aus der Zeichnung über dem Bodenelement 16 soweit vor, dass die Produktbeilage 3 seitlich des Schlittens 6 gehalten wird. Die Halteschenkel 32, 34 des Haltelements 26 erstrecken sich dabei parallel zum Laufschienenverlauf.

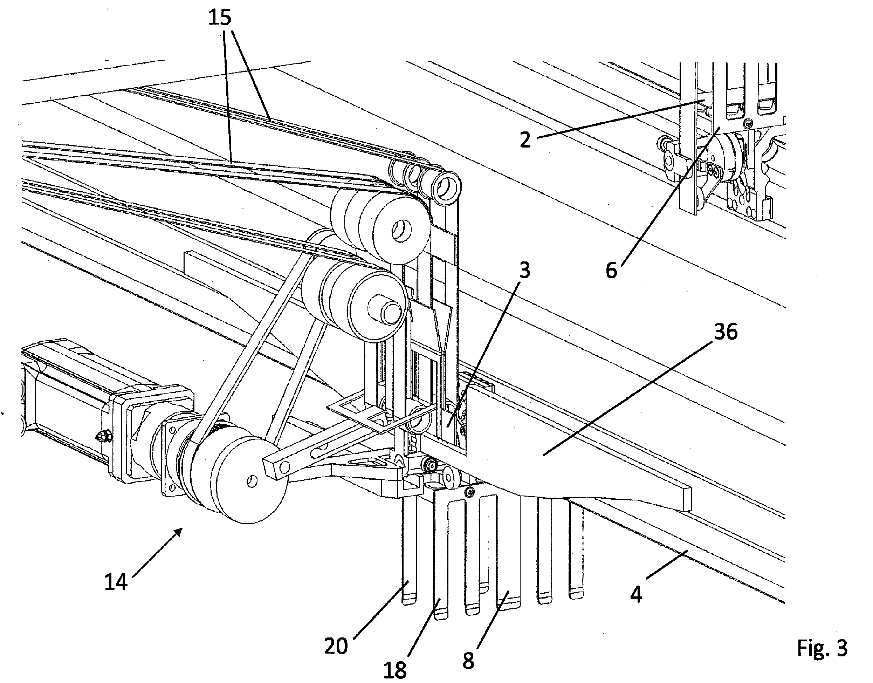

Bezug nehmend auf Fig. 3 ist eine vergrößerte Ansicht eines Abschnitts der in Fig. 1 gezeigten Transportvorrichtung 1 gezeigt. In dieser Darstellung sind der zuvor anhand der Fig. 2 beschriebene Schlitten 6 und ein weiterer, baugleicher Schlitten 8, der sich im Bereich der Produktbeilage-Zuführstation 14 befindet, gezeigt. Die äußeren Endabschnitte der Seitenbegrenzungselemente 18, 20 des unteren Schlittens 8 weisen nach unten. Der untere Schlitten 8 wurde in eine Position neben der Produktbeilage-Zuführstation 14 bewegt, um eine gefalzte Produktbeilage 3 aufzunehmen. Seitlich neben der Laufschiene 4 ist im Bereich der Produktbeilage-Zuführstation 14 bzw. zwischen der Laufschiene 4 und der Produktbeilage-Zuführstation 14 eine Kurvenscheibe 36 angeordnet, die nachfolgend näher beschrieben ist.

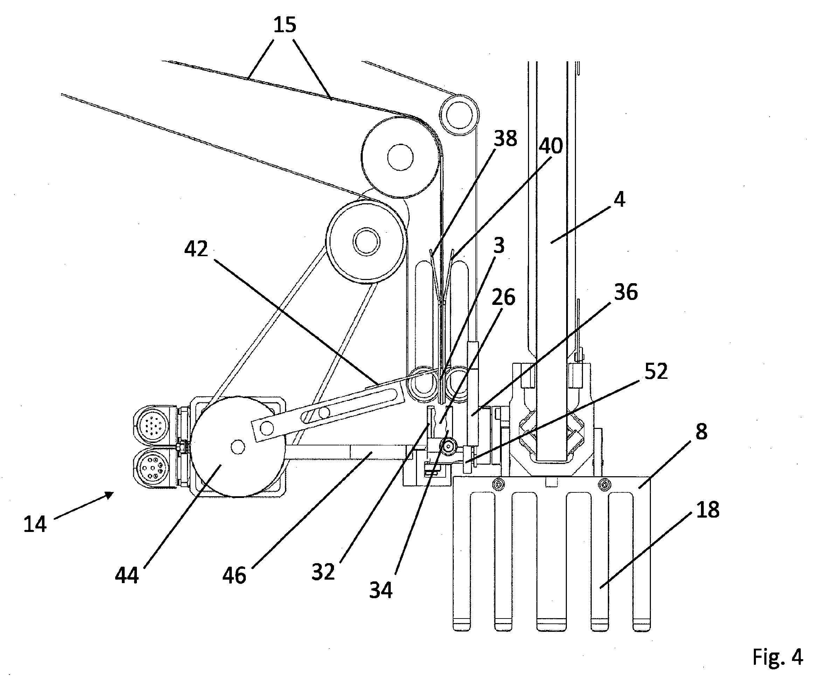

Die in Fig. 3 in der Perspektivansicht gezeigte Anordnung ist in Fig. 4 in der Seitenansicht gezeigt. Die Produktbeilage-Zuführstation 14 umfasst zwei Führungsplatten 38, 40, in der eine gefalzte Produktbeilage 3 mittels der eng aneinander geführten Riemenbänder 15 nach unten geführt und dem offenen Halteelement 26 angenähert wird. Um die Produktbeilage 3 aus dem unteren Bereich der Führungsplatten 38, 40 sicher nach unten zu fördern, ist ein Rechen 42 vorgesehen, der mit Hilfe eines Exzenterantriebs 44 wiederkehrende Schiebebewegungen von oben nach unten vollzieht.

Weiterhin ist an dem Exzenterantrieb 44 ein Schieberelement 46 in der Art einer Schiebestange angebracht. Das Schiebeelement 46 dient dazu, den dem Schlitten 8 zugewandten Halteschenkel 34, der mittels einer nicht gezeigten Feder in Richtung auf den dem Schlitten 8 abgewandten Halteschenkel 32 vorgespannt ist, gegen die Federkraft der Feder von dem anderen Halteschenkel 32 wegzubewegen, um das Halteelement 26 zur Aufnahme der Produktbeilage 3 zu öffnen (geöffnete Stellung bzw. deaktivierter Zustand). Zum Schließen des Halteelements 26 wird das Schiebeelement 46 zurückbewegt, d.h. in der Fig. 4 nach links bewegt, so dass der Halteschenkel 34 infolge der Federkraft gegen den zweiten Halteschenkel 32 gedrückt wird (geschlossene Stellung bzw. aktivierter Zustand).

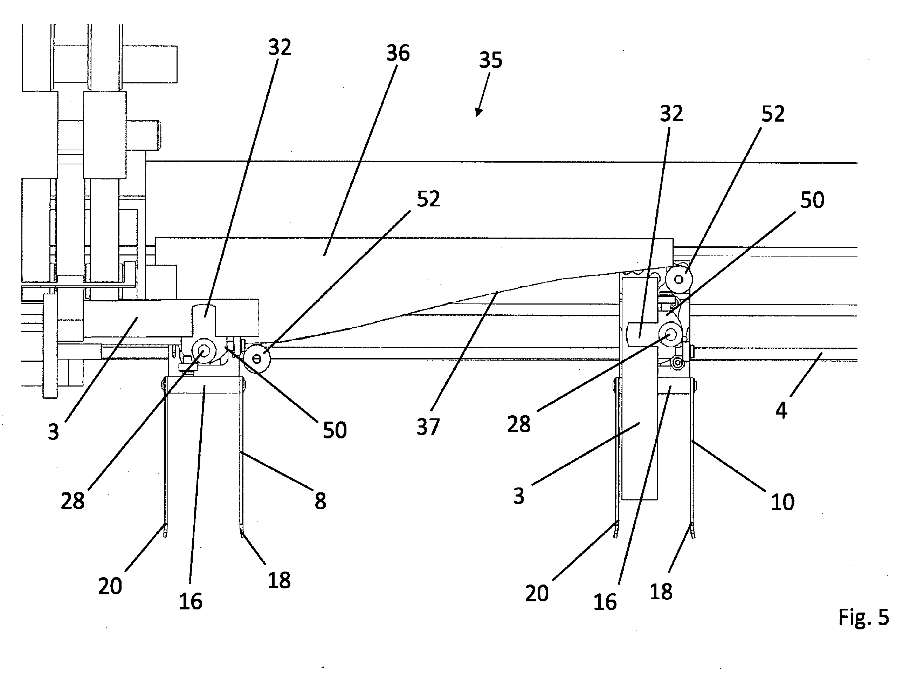

Fig. 5 zeigt eine vergrößerte Vorderansicht eines Abschnitts des unteren Trums der Transportvorrichtung 1 und des Kurvenscheibenmechanismus 35. Es sind insgesamt zwei Schlitten 8, 10 gezeigt. Die Halteschenkel 32, 34 des Halteelements 26 des linken Schlittens 8 befinden sich hinsichtlich ihrer Drehstellung in der Produktbeilage-Aufnahmeposition, d.h. die Halteschenkel 32, 34 erstrecken sich in etwa quer zum Laufschienenverlauf bzw. in Richtung weg von dem Bodenelement 16 des Schlittens 8. Die Halteschenkel 32, 34 des Halteelements 26 des rechten Schlittens 10 befinden sich hinsichtlich ihrer Drehstellung dagegen bereits in der Produktbeilage-Übergabeposition (wie z.B. in Fig. 2 gezeigt). In der Produktbeilage-Übergabeposition erstrecken sich die Halteschenkel 32, 34 des Halteelements 26 in etwa parallel zum Laufschienenverlauf.

Das Halteelement 26 ist im Gegenuhrzeigersinn um die Drehachse 28 mittels Federkraft vorgespannt und ist über ein Verbindungselement 50, welches als ein Hebel fungiert, mit einer Kurvenrolle 52 verbunden, die ebenfalls mittels der Federkraft an die Kurvenscheibe 36 gedrückt wird und an der Unterseite 37 der Kurvenscheibe 36 abrollen kann. Wird nun der linke Schlitten 8 mit Hilfe der Linearmotor-Antriebsvorrichtung 11 nach rechts bewegt, so rollt die Kurvenrolle 52 an der aufsteigenden Unterseite 37 der Kurvenscheibe 36 ab, und zwar unter einer Verschwenkbewegung des Verbindungselements 50 im Gegenuhrzeigersinn um etwa 90° in Richtung der Federkraft. Dadurch wird das Halteelement 26 ebenfalls um etwa 90° im Gegenuhrzeigersinn in Richtung der Federkraft verschwenkt. Wenn die Kurvenrolle 52 an der abfallenden Flanke der Kurvenscheibe 36 abrollt, bewegt sich das Halteelement 26 gegen die Federkraft wieder in die Ausgangsposition zurück. Während am linken Schlitten 8 die Produktbeilage 3 in Querkantlage gehalten wird (Produktbeilage-Aufnahmeposition), wird die Produktbeilage 3 am rechten Schlitten 10 in Hochkantlage gehalten (Produktbeilage-Übergabeposition).

Ein Aufnahme/Übergabe-Zyklus einer Produktbeilage 3 lässt sich anhand der Figuren wie folgt beschreiben. Ein Schlitten wird - wie der Schlitten 8 in Fig. 1 - in Richtung auf die Produktbeilage-Zuführstation 14 bewegt, hat jedoch die Kurvenscheibe 36 noch nicht erreicht. Sobald der Schlitten die Kurvenscheibe 36 erreicht hat, rollt die Kurvenrolle 52 an der ansteigenden Flanke der Kurvenscheibe 36 ab und versetzt das Halteelement 26 in Schwenkbewegung, so dass das Halteelement 26 hinsichtlich seiner Drehstellung aus der Produktbeilage-Übergabeposition in die in den Fig. 3 und 4 gezeigte Produktbeilage-Aufnahmeposition schwenkt. In dieser Produktbeilage-Aufnahmeposition weisen die Halteschenkel 32, 34 des Halteelements 26 nach oben. Nach dem Öffnen des Halteelements 26 mit Hilfe des Schieberelements 46, mit anderen Worten im deaktivierten Zustand des Halteelements 26, wird eine Produktbeilage 3 zwischen die Halteschenkel 32, 34 des Halteelements 26 eingeführt. Das Schieberelement 46 wird zurückgezogen und somit schließen sich die Halteschenkel 32, 34, um die Produktbeilage 3 festzuklemmen (aktivierter Zustand des Halteelements 26). Anschließend wird der Schlitten aus der Position, die z.B. der Schlitten 8 in Fig. 3 einnimmt, weiter im Gegenuhrzeigersinn entlang der Laufschiene 4 bewegt, während sich die Kurvenrolle 52 an der abfallenden Flanke der Kurvenscheibe 36 abrollt und das Halteelement 26 mittels der Federkraft wieder in seine Produktbeilage-Übergabeposition zurückgeschwenkt wird (wie sie der rechte Schlitten 10 in Fig. 1 und 5 eingenommen hat). Anschließend wird der Schlitten weiter im Gegenuhrzeigersinn bewegt, bis er das obere Trum der umlaufenden Laufschiene 4 erreicht hat, wie in Fig. 2 gezeigt.

Wie der in Fig. 2 bzw. in Fig. 1 gezeigte Schlitten 6 kann der Schlitten nun entlang dem oberen Trum der Laufschiene 4 verfahren werden, um an entsprechender Stelle das Produkt 2 bzw. die Produkte 2, vorzugsweise Blisterpackungsstapel, aufzunehmen. In Fig. 1 und 2 ist bereits ein Produkt 2 in der Aufnahme des Schlittens 6 angeordnet. Anschließend wird der Schlitten mit dem wenigstens einen Produkt 2 und der zugeordneten Produktbeilage 3 in eine Übergabeposition bewegt, an der die Produktbeilage 3 freigegeben und zusammen mit dem wenigstens einem Produkt 2 in eine Verpackung, vorzugsweise eine Faltschachtel, eingeschoben wird. Hierbei befindet sich das Halteelement 26 hinsichtlich seiner Drehstellung weiterhin in der Produktbeilage-Übergabeposition und muss zum Zeitpunkt der Übergabe gleichzeitig in den deaktivierten Zustand (geöffnete Stellung) überführt worden sein.

Wenngleich vorliegend von einer Bewegung der Schlitten 6, 8, 10 im Gegenuhrzeigersinn um die Laufschiene 4 ausgegangen wird, können bei der gezeigten Vorrichtung die Schlitten 6, 8, 10 selbstverständlich auch im Uhrzeigersinn um die Laufschiene 4 bewegt werden, d.h. die Transportvorrichtung ist bidirektional betreibbar.

Im dargestellten Beispielsfall wurde das Halteelement 26 als Haltezange beschrieben, deren aktivierter Zustand zum Halten der Produktbeilage 3 die geschlossene Stellung der Halteschenkel 32, 34 und deren deaktivierter Zustand zum Freigeben bzw. Aufnehmen der Produktbeilage 3 die geöffnete Stellung der Halteschenkel 32, 34 ist. Es sind jedoch auch andere Halteelement 26 vorstellbar, beispielsweise Saugelemente oder ähnliches.

## Patentansprüche

1. Transportvorrichtung (1) zum Fördern von Produkten (2), insbesondere Blisterpackungen, mit
mindestens einem bewegbaren Schlitten (6, 8, 10) zum Fördern wenigstens eines Produktes (2),
einer ortsfesten, umlaufend angeordneten Laufschiene (4) zur Führung des mindestens einen Schlittens (6, 8, 10), und
einer Linearmotor-Antriebsvorrichtung (11) zum Antrieb des mindestens einen Schlittens (6, 8, 10), wobei der mindestens eine Schlitten (6, 8, 10) mindestens einen Permanentmagneten (13) aufweist, der mit der Linearmotor-Antriebsvorrichtung (11) in Wirkverbindung steht,
**dadurch gekennzeichnet, dass**
an dem Schlitten (6, 8, 10) ein Halteelement (26) zum Halten einer dem wenigstens einem Produkt (2) zugeordneten Produktbeilage (3) angeordnet ist,
dass das Halteelement (26) zum Halten der Produktbeilage (3) in einen aktivierten Zustand und zum Aufnehmen oder Freigeben der Produktbeilage (3) in einen deaktivierten Zustand bringbar ist, und
dass das Halteelement (26) an dem Schlitten (6, 8, 10) derart angeordnet ist, dass die Produktbeilage (3) seitlich neben der Bewegungsbahn des wenigstens einen Produktes (2) gehalten und mit der Bewegung des wenigstens einen Produktes (2) entlang der Laufschiene (4) mitbewegt wird.

2. Transportvorrichtung (1) nach Anspruch 1, **dadurch gekennzeichnet, dass** das Halteelement (26) um eine Drehachse (28), die sich in etwa senkrecht zum Laufschienenverlauf erstreckt, schwenkbar gelagert ist, wobei das Halteelement (26) hinsichtlich seiner Drehstellung zwischen einer Produktbeilage-Aufnahmeposition und einer Produktbeilage-Übergabeposition schwenkbar ist.

3. Transportvorrichtung (1) nach Anspruch 2, **dadurch gekennzeichnet, dass** der Schwenkwinkel zwischen der Produktbeilage-Aufnahmeposition und der Produktbeilage-Übergabeposition in etwa 90° beträgt.

4. Transportvorrichtung (1) nach einem der vorhergehenden Ansprüche, **dadurch gekennzeichnet, dass** das Halteelement (26) als Haltezange mit zwei Halteschenkeln (32, 34) ausgebildet ist, wobei wenigstens ein Halteschenkel (34) in Richtung auf den jeweils anderen Halteschenkel (32) in die geschlossene Stellung vorgespannt, insbesondere mittels Federkraft vorgespannt ist.

5. Transportvorrichtung (1) nach Anspruch 4, **dadurch gekennzeichnet, dass** sich in der Produktbeilage-Aufnahmeposition die Halteschenkel (32, 34) in etwa quer zum Laufschienenverlauf erstrecken und sich in der Produktbeilage-Übergabeposition die Halteschenkel (32, 34) in etwa parallel zum Laufschienenverlauf erstrecken.

6. Transportvorrichtung (1) nach einem der Ansprüche 2 bis 5, **dadurch gekennzeichnet, dass** das Halteelement (26) in der Produktbeilage-Übergabeposition vorgespannt, insbesondere mittels Federkraft vorgespannt ist.

7. Transportvorrichtung (1) nach einem der Ansprüche 2 bis 6, **dadurch gekennzeichnet, dass** an dem Schlitten (6, 8, 10) ein Anschlag ausgebildet ist, an dem das Halteelement (26) in der Produktbeilage-Übergabeposition anliegt, um die Schwenkbewegung zu begrenzen.

8. Transportvorrichtung (1) nach einem der Ansprüche 2 bis 7, **dadurch gekennzeichnet, dass** an der Laufschiene (4) eine Kurvenscheibe (36) angeordnet ist und an dem Halteelement (26) eine Kurvenrolle (52) angeordnet ist, die an der Kurvenscheibe (36) abrollt, wobei die Kurvenscheibe (36) und die Kurvenrolle (52) derart zusammenwirken, dass das Halteelement (26) durch die Bewegung des Schlittens (6, 8, 10) entlang der Laufschiene (4) in Schwenkbewegung versetzt wird.

9. Transportvorrichtung (1) nach Anspruch 8, **dadurch gekennzeichnet, dass** die Kurvenscheibe (36) einen ersten Kurvenabschnitt und einen zweiten Kurvenabschnitt aufweist, wobei beim Abrollen der Kurvenrolle (52) entlang des ersten Kurvenabschnitts das Halteelement (26) in die Produktbeilage-Aufnahmeposition bewegt wird, und beim Abrollen der Kurvenrolle (52) entlang des zweiten Kurvenabschnitts das Halteelement (26) in die Produktbeilage-Übergabeposition zurückbewegt wird.

10. Transportvorrichtung (1) nach Anspruch 9, bezogen auf Anspruch 4, **dadurch gekennzeichnet, dass** im Bereich des ersten Abschnitts der Kurvenscheibe (36) ein Schieberelement (46) vorgesehen ist, um die Halteschenkel (32, 34) gegen die Vorspannung zueinander auf Abstand zu halten, so dass das Halteelement (26) zur Aufnahme einer Produktbeilage (3) geöffnet ist.

11. Transportvorrichtung (1) nach einem der vorhergehenden Ansprüche, **dadurch gekennzeichnet, dass** jeder Schlitten (6, 8, 10) ein Bodenelement (16) und zwei davon senkrecht nach oben abragende und sich quer zum Laufschienenverlauf erstreckende Seitenbegrenzungselemente (18, 20) aufweist, die die Aufnahme für das wenigstens eine Produkt (2) definieren.

12. Transportvorrichtung (1) nach Anspruch 11, **dadurch gekennzeichnet, dass** die Aufnahme in Richtung quer zum Laufschienenverlauf beidseitig offen ist.

## Claims

1. Transport device (1) for conveying products (2), more particularly blister packets, with
at least one movable slide carriage (6, 8, 10) for conveying at least one product (2),
a locally fixed circumferentially arranged running track (4) for guiding the at least one slide carriage (6, 8, 10) and
a linear motor drive device (11) for driving the at least one slide carriage (6, 8, 10) wherein the at least one slide carriage (6, 8, 10) has a least one permanent magnet (13) which is in active connection with the linear motor drive device (11), **characterised in that** a holding element (26) is arranged on the slide carriage (6, 8, 10) for holding a product insert (3) assigned to the at least one product (2),
that the holding element (26) for holding the product insert (3) can be brought into an activated state and for receiving or releasing the product insert (3) into a deactivated state, and
that the holding element (26) is arranged on the slide carriage (6, 8, 10) so that the product insert (3) is held at the side next to the path of movement of the at least one product (2) and is moved along the running track (4) alongside the movement of the at least one product (2).

2. Transport device (1) according to claim 1 **characterised in that** the holding element (26) is mounted for pivotal movement about a rotary axis (28) which extends approximately perpendicularly to the running track path, wherein the holding element (26) is capable of pivoting with regard to its rotary position between the product insert receiving position and a product insert transfer position.

3. Transport device (1) according to claim 2 **characterised in that** the pivotal angle between the product insert receiving position and the product insert transfer position is about 90°.

4. Transport device (1) according to one of the preceding claims **characterised in that** the holding element (26) is designed as holding tongs with two holding arms (32, 34) wherein at least one holding arm (34) is pretensioned, more particularly by means of spring force, in the direction of the respective other holding arm (32) and into the closed position.

5. Transport device (1) according to claim 4 **characterised in that** in the product insert receiving position the holding arms (32, 34) extend approximately transversely to the running track path and in the product insert transfer position the holding arms (32, 34) extend approximately parallel to the running track path.

6. Transport device (1) according to one of claims 2 to 5 **characterised in that** the holding element (26) is pretensioned, more particularly by means of spring force, in the product insert transfer position.

7. Transport device (1) according to one of the claims 2 to 6 **characterised in that** a stop is formed on the slide carriage (6, 8, 10) and is adjoined by the holding element (26) in the product insert transfer position in order to define the pivotal movement.

8. Transport device (1) according to one of claims 2 to 7 **characterised in that** a cam disc (36) is arranged on the running track (4) and a cam roller (52) is arranged on the holding element (26) to roll down the cam disc (36), wherein the cam disc (36) and the cam roller (52) interact with one another so that the holding element (26) is set in pivotal movement through the movement of the slide carriage (6, 8, 10) along the running track (4).

9. Transport device (1) according to claim 8 **characterised in that** the cam disc (36) has a first cam section and a second cam section wherein as the cam roller (52) rolls down along the first cam section the holding element (26) is moved into the product insert receiving position, and as the cam roller (52) rolls down along the second cam section the holding element (26) is moved back into the product insert transfer position.

10. Transport device (1) according to claim 9, with reference to claim 4, **characterised in that** a slider element (46) is provided in the region of the first section of the cam disc (36) in order to hold the holding arms (32, 34) pretensioned at a distance from one another so that the holding element (26) is opened in order to receive a product insert (3).

11. Transport device (1) according to one of the preceding claims **characterised in that** each slide carriage (6, 8, 10) has a base element (16) and two side boundary elements (18, 20) which project vertically upwards therefrom and extend transversely to the running track path, thereby defining the receiving area for the at least one product (2).

12. Transport device (1) according to claim 11 **characterised in that** the receiving area is open on both sides in a direction transversely to the running track path.

## Revendications

1. Dispositif de transport (1) de produits (2), en particulier de blisters, comprenant
au moins un chariot mobile (6, 8, 10) pour le transport d'au moins un produit (2),
une glissière (4) rotative, stationnaire, pour le guidage du au moins un chariot (6, 8, 10), et
un dispositif d'entraînement par moteur linéaire (11) pour l'entraînement du au moins un chariot (6, 8, 10), le au moins un chariot (6, 8, 10) présentant au moins un aimant permanent (13) en liaison opérationnelle avec l'entraînement par moteur linéaire (11),
**caractérisé en ce que**
un élément de maintien (26) est disposé sur le chariot (6, 8, 10) pour le maintien d'un encart de produits (3) associé à le au moins un produit (2),
que l'élément de maintien (26) peut être amené dans un état activé pour le maintien de l'encart de produits (3) et dans un état désactivé pour la réception ou la libération de l'encart de produits (3), et
que l'élément de maintien (26) est disposé sur le chariot (6, 8, 10) de telle sorte que l'encart de produits (3) est maintenu latéralement à côté de la trajectoire de déplacement du au moins un produit (2) et est associé au déplacement du au moins un produit (2) le long de la glissière (4).

2. Dispositif de transport (1) selon la revendication 1, **caractérisé en ce que** l'élément de maintien (26) est monté pivotant autour d'un axe de rotation (28), qui s'étend à peu près perpendiculairement au tracé de la glissière, l'élément de maintien (26) pouvant pivoter quant à sa position de rotation entre une position de réception de l'encart de produits et une position de transfert de l'encart de produits.

3. Dispositif de transport (1) selon la revendication 2, **caractérisé en ce que** l'angle de pivotement entre la position de réception de l'encart de produits et la position de transfert de l'encart est d'environ 90°.

4. Dispositif de transport (1) selon l'une des revendications précédentes, **caractérisé en ce que** l'élément de maintien (26) est réalisé sous forme de pince avec deux branches de fixation (32, 34), au moins une branche de fixation (34) étant précontrainte dans la position de fermeture en direction de l'autre branche de fixation (32) respective, étant en particulier précontrainte par force de ressort.

5. Dispositif de transport (1) selon la revendication 4, **caractérisé en ce que** les branches de fixation (32, 34) s'étendent à peu près transversalement au tracé de la glissière dans la position de réception de l'encart de produits et les branches de fixation (32, 34) s'étendent à peu près parallèlement au tracé de la glissière dans la position de transfert de l'encart de produits.

6. Dispositif de transport (1) selon l'une des revendications 2 à 5, **caractérisé en ce que** l'élément de maintien (26) est précontraint dans la position de transfert de l'encart de produits, est en particulier précontraint par force de ressort.

7. Dispositif de transport (1) selon l'une des revendications 2 à 6, **caractérisé en ce qu'**une butée est réalisée sur le chariot (6, 8, 10), butée sur laquelle s'applique l'élément de maintien (26) dans la position de transfert de l'encart de produits, afin de limiter le mouvement de pivotement.

8. Dispositif de transport (1) selon l'une des revendications 2 à 7, **caractérisé en ce qu'**une came disque (36) est disposée sur la glissière (4) et un galet de came (52) est disposé sur l'élément de maintien (26), lequel galet roule sur la came disque (36), la came disque (36) et le galet de came (52) coopérant de telle sorte que l'élément de maintien (26) est mis en mouvement de pivotement par le déplacement du chariot (6, 8, 10) le long de la glissière (4).

9. Dispositif de transport (1) selon la revendication 8, **caractérisé en ce que** la came disque (36) présente une première section de came et une seconde section de came, l'élément de maintien (26) étant déplacé dans la position de réception de l'encart de produits lors du roulage du galet (52) le long de la première section de came, et l'élément de maintien (26) étant ramené dans la position de transfert de l'encart de produits lors du roulage du galet (52) le long de la seconde section de came.

10. Dispositif de transport (1) selon la revendication 9, en rapport avec la revendication 4, **caractérisé en ce qu'**un élément à tiroir (46) est prévu dans la zone de la première section de la came disque (36), pour maintenir à distance mutuelle les branches de fixation (32, 34) contre la force de précontrainte, de sorte que l'élément de maintien (26) est ouvert pour recevoir un encart de produits (3).

11. Dispositif de transport (1) selon l'une des revendications précédentes, **caractérisé en ce que** chaque chariot (6, 8, 10) présente un élément de fond (16) et deux éléments de délimitation latéraux (18, 20), qui dépassent de ce dernier perpendiculairement vers le haut et s'étendent transversalement au tracé de la glissière, lesquels éléments définissent le logement pour le au moins un produit (2).

12. Dispositif de transport (1) selon la revendication 11, **caractérisé en ce que** le logement est ouvert bilatéralement dans la direction transversale au tracé de la glissière.
